**Europäisches Patentamt**

**European Patent Office**

**Office européen des brevets**

(19)

(11) Veröffentlichungsnummer: **0 154 001**
**B1**

(12) **EUROPÄISCHE PATENTSCHRIFT**

(45) Veröffentlichungstag der Patentschrift:
23.08.89

(51) Int. Cl.⁴: **F 16 L 25/00**

(21) Anmeldenummer: **84114218.5**

(22) Anmeldetag: **24.11.84**

(54) **Kupplungsteil zum druckdichten Befestigen einer Druckmittelleitung an einem Druckmittelanschluss.**

(30) Priorität: **06.03.84 DE 3408135**

(43) Veröffentlichungstag der Anmeldung:
**11.09.85 Patentblatt 85/37**

(45) Bekanntmachung des Hinweises auf die Patenterteilung:
**23.08.89 Patentblatt 89/34**

(84) Benannte Vertragsstaaten:
**DE FR GB IT SE**

(56) Entgegenhaltungen:
**EP-A-0 018 206
DD-A-46 915
DE-C-1 070 109
DE-C-1 236 438
DE-U-7 926 077
FR-A-1 447 621
GB-A-1 440 866
US-A-2 389 895
US-A-3 434 092**

(73) Patentinhaber: **WABCO Westinghouse
Fahrzeugbremsen GmbH, Am Lindener Hafen 21
Postfach 91 12 80, D-3000 Hannover 91 (DE)**

(72) Erfinder: **Abel, Joachim, Im Grossen Buchenfeld
13, D-3000 Hannover (DE)**
Erfinder: **Rovira, Juan, Wilhelm- Reime- Strasse 11,
D-3006 Garbsen 4 (DE)**

(74) Vertreter: **Schrödter, Manfred, WABCO
Westinghouse Fahrzeugbremsen GmbH Am
Lindener Hafen 21 Postfach 91 12 80, D-3000
Hannover 91 (DE)**

EP 0 154 001 B1

## Beschreibung

Die Erfindung betrifft eine Kupplungseinrichtung zum druckdichten Befestigen einer Druckmittelleitung an einem Druckmittelanschluß gemäß dem Oberbegriff des Patentanspruchs 1.

In zunehmendem Maße wird es notwendig, mit Druckmittel arbeitende Geräte und Einrichtungen zusätzlich zum Druckmittelanschluß mit einem elektrischen Anschluß zu versehen, um Bewegungsabläufe oder auch Druckänderungen in oder an den Geräten und Einrichtungen überwachen und beeinflussen zu können. Ein Druckmittelanschluß und ein elektrischer Anschluß sind beispielsweise in einer Federungsanlage eines Fahrzeugs mit Niveauregulierung erforderlich, wenn die Einrichtung zum Feststellen des jeweiligen Abstandes zwischen Achse und Fahrzeugrahmen elektrisch bzw. elektronisch arbeitet und Teile dieser Einrichtung im Druckraum der Federelemente bzw. der Dämpfer angeordnet sind.

Die Anordnung einer druckdichten Durchführung für die elektrischen Kontakte und Leitungen vom Druckraum zur Atmosphäre ist aufgrund des geringen Platzangebotes schwierig und aufwendig.

Der Erfindung liegt die Aufgabe zugrunde, eine Kupplungseinrichtung der eingangs genannten Art zu schaffen, welche es ermöglicht, mit einfachen Mitteln eine Verbindung von einem ein Druckmittel aufnehmenden Raum bzw. von einem in diesem Raum angeordneten Teil zu einer außerhalb dieses Raumes liegenden Einrichtung herzustellen, wobei sichergestellt sein muß, daß das Druckmittel nicht durch den elektrische Kontakte haltenden Teil der Kupplungseinrichtung entweichen kann.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die erfindungsgemäße Kupplungseinrichtung bietet insbesondere den Vorteil, mehrere Anschlüsse für unterschiedliche Zwecke in einem einzigen Bauteil zusammenfassen zu können, so daß auch nur eine Ausnehmung zur Aufnahme dieses Bauteils in der Wandung oder im Deckel der mit Druckmittel arbeitenden Einrichtung vorgesehen werden muß. Der Platzbedarf der erfindungsgemäßen Einrichtung ist sehr gering. Die Montage wird vereinfacht, insbesondere dann, wenn gemäß einer vorteilhaften Ausführungsform nach Unteranspruch 8 die Kupplungseinrichtung als Stecker ausgebildet ist.

Es wird mit einfachen Mitteln verhindert, daß durch den die elektrischen Kontakte haltenden Teil der Kupplungseinrichtung Druckmittel entweichen kann.

Aus der US-A-2 389 895 ist eine Kupplungseinrichtung bekannt, die eine an diese angeschlossene Druckmittelleitung aufweist. In der Druckmittelleitung sind elektrische Leitungen vorgesehen, die mit in der Kupplungseinrichtung angeordneten elektrischen Kontaktbuchsen verbunden sind. Die elektrischen Kontaktbuchsen sind in einem Sockelteil, welches in der Kupplungseinrichtung angeordnet ist, gelagert.

Das Sockelteil weist Druckmittelanschlüsse auf, die von dem die elektrischen Kontaktbuchsen beinhaltenden Teil des Sockelteiles getrennt angeordnet sind. Soll diese Kupplungseinrichtung mit einem sowohl elektrische Gegenkontakte als auch Druckmittelanschlüsse aufweisenden Bauteil verbunden werden, so muß dieses Bauteil von dem die elektrischen Gegenkontakte tragenden Teil getrennte Ausnehmungen zur Aufnahme der Druckmittelanschlüsse aufweisen. Von Nachteil ist bei dieser bekannten Kupplungseinrichtung, daß in dem Bauteil, mit welchem die Kupplungseinrichtung verbunden werden soll, mehrere Ausnehmungen vorzusehen sind, und zwar eine Ausnehmung zur Aufnahme des die elektrischen Kontaktbuchsen aufweisenden Teiles der Kupplungseinrichtung und weitere Ausnehmungen zur Aufnahme der an der Kupplungseinrichtung angeordneten Druckmittelanschlüsse.

Die DE-C-1 070 109 zeigt eine Schlauch- und Zündkabelkupplung, bei welcher die elektrischen Kontakte innerhalb eines vom Druckmittel durchströmten Raumes liegen. Die mit dem elektrischen Kontakten verbundenen elektrischen Leitungen sowie die Verbindungselemente für die elektrischen Leitungen und die elektrischen Kontakte sind ebenfalls in dem vom Druckmittel durchströmten Raum gelegen.

Diese bekannte Kupplungseinrichtung hat jedoch den Nachteil, daß die elektrischen Leitungen mit ihren den elektrischen Kontakten abgewandten Enden zwecks Herstellung einer Verbindung mit einer Stromquelle entweder durch die Wand des Schlauches oder durch das offene Ende des Schlauches aus diesem herausgeführt werden müssen.

Eine Durchführung für die elektrischen Leitungen in der Schlauchwand vorzusehen, ist mit einem großen Risiko bezüglich der Druckdichtigkeit behaftet. Führt man die elektrischen Leitungen jedoch durch das offene Ende des Schlauches aus diesem heraus, so münden die Leitungen in einen Druckmittel enthaltenden Raum. Ein Montieren oder Demontieren der elektrischen Leitungen bei unter Druck stehendem Schlauch ist bei dieser bekannten Einrichtung nicht möglich.

Anhand der Zeichnung wird ein Ausführungsbeispiel der Erfindung nachstehend näher erläutert.

Es zeigen:

Fig. 1 ein als kombinierte elektro-pneumatische Durchführung ausgebildete Kupplungseinrichtung zum Verbinden des Druckraumes einer Dämpfereinrichtung mit einer Druckmittelquelle und eines im Druckraum befindlichen elektrischen Teiles mit einer außerhalb des Druckraumes gelegenen elektrischen Einrichtung und

Fig. 2 eine Draufsicht auf die Kupplungseinrichtung gemäß Fig. 1.

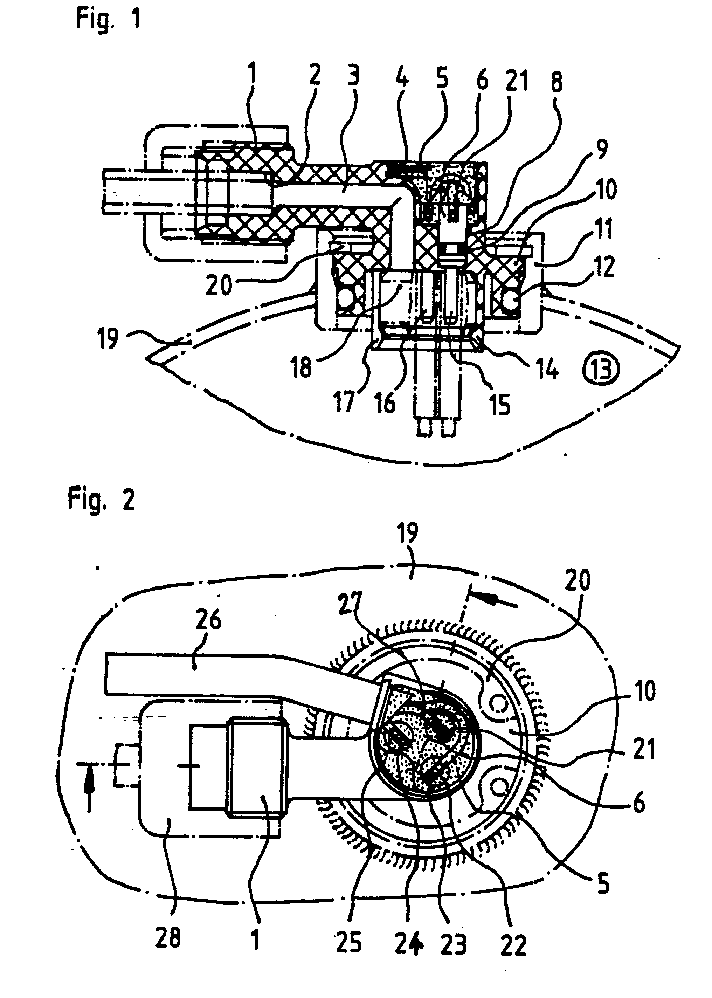

In der Fig. 1 ist im Schnitt ein Teil einer hydropneumatischen Feder dargestellt, in deren Mantel (19) ein ringförmiger Anschluß (11) zur Aufnahme einer elektropneumatischen Durchführung angeordnet ist. Die elektropneumatische Durchführung besteht aus einem vorzugsweise aus Kunststoff gefertigten Kupplungsteil (1, 10) in welchem ein Druckmittelkanal (3) und mehrere abgestufte Bohrungen (8) zur Aufnahme von Steckkontakten (6, 15, 16) vorgesehen sind. Das Kupplungsteil weist einen ringförmigen Teil (10) auf, dessen Außendurchmesser in etwa dem Innendurchmesser des Druckmittelanschlusses (11) entspricht. In einer Umfangsnut des Teiles (10) ist ein Dichtring (12) gelagert, welcher dichtend an der Wandung des Anschlusses (11) anliegt. Koaxial zum ringförmigen Teil (10) ist ein ringförmiger Vorsprung (14) am Teil (10) vorgesehen. An seinem sich in den Druckraum (13) der hydropneumatischen Feder (19, 13) hineinerstreckenden Endbereich weist der ringförmige Vorsprung (14) eine sich radial nach innen erstreckende umlaufende Wulst (17) auf. Der Kanal (3) mündet in dem vom ringförmigen Vorsprung (14) begrenzenden Raum (18). Der als Druckmittel-Anschlußstutzen (2) ausgebildete Eingang des Kanals (3) befindet sich in einem in etwa rechtwinklig zum Teil (10) angeordneten Teil (1) des Kupplungsteiles (1, 10). Mittels eines Halteringes (20) der in eine in der Wandung des Anschlusses (11) vorgesehenen Nut eingeschnappt ist und auf dem Randbereich des Teiles (10) aufliegt wird das Kupplungsteil (1, 10) auf einer Abstufung des Anschlusses (11) gehalten.

Der in den Aufnahmebohrungen (8) befindlichen Teil (6) der Steckkontakte (6, 15, 16) weist einen größeren Querschnitt auf als der sich in den Raum (18) hineinerstreckende Teil (15, 16). Mittels eines Dichtringes (9), welcher in einer Umfangsnut des den größeren Querschnitt aufweisenden Teiles (6) eines jeden Steckkontaktes (6, 15, 16) gelagert ist, wird ein ungewolltes austreten von Druckmittel aus dem Druckraum (13) über die Aufnahmebohrungen (8) verhindert. In einer oberhalb der Aufnahmebohrung (8) vorgesehenen, einen größeren Querschnitt aufweisenden Ausnehmung (4) ist ein vorzugsweise aus Kunststoff gefertigter Verschluß (5) eingesetzt, mittels welchem die Steckkontakte gegen Feuchtigkeit und Schmutz geschützt werden.

Die Draufsicht auf die im vorstehenden beschriebene Kupplungseinrichtung gemäß Fig. 2 zeigt einen Ausschnitt der hydropneumatischen Feder mit der erfindungsgemäßen Kupplungseinrichtung. Der besseren Übersicht halber sind die den in Fig. 1 gezeigten Bauteilen gleichen Bauteile mit gleichen Bezugszeichen versehen.

In einer Ausnehmung in der Wandung (19) der hydropneumatischen Feder ist der zylindrische Teil (10) des Kupplungsteiles (1, 10) eingesetzt und mittel eines Sprengringes (20) gehalten. Der in etwa rechtwinklig zum Teil (10) angeordnete Teil (1) des Kupplungsteiles (1, 10) weist die von dem Verschluß (5) abgedeckte Ausnehmung auf, die einerseits zum Schutz der Steckkontakte (22, 6, 25) und andererseits zur Aufnahme von mit den Steckkontakten (6, 22, 25) verbundenen Enden elektrischer Leitungen (21, 23, 27) dient. Die elektrischen Leitungen (21, 23, 27) sind in einer Hülse (26), die an das Teil (1) des Kupplungsteiles (1, 10) anschließt, zusammengefaßt. Der Anschluß einer Druckmittelleitung (28) erfolgt am Teil (1) des Kupplungsteiles (1, 10).

Die Montage der erfindungsgemäßen Kupplungseinrichtung kann z. B. auf einfache Art und Weise derart erfolgen, daß zuerst die von einer elektrischen oder elektronischen Einrichtung kommenden Leitungen mit den Kontakten (6, 22, 25) verbunden werden, der Verschluß (5) in die Ausnehmung (4) des Kupplungsteiles (1, 10) eingeschnappt und dann das gesamte Kupplungsteil (1, 10) nach Art eines Steckers in die Ausnehmung der hydropneumatischen Feder eingesteckt wird.

Dabei schnappt die Wulst (17) des die Kontakte (6, 22, 25) umgebenden ringförmigen Fortsatzes (14) in eine entsprechende Ausnehmung eines hier nicht dargestellten Gegenstückes ein, welches mit im Druckraum der hydropneumatischen Feder (19, 13) angeordneten elektrischen bzw. elektronischen Teilen verbunden ist. Die Steckkontakte (6, 22, 25) werden bei diesem Vorgang in entsprechende Gegenkontakte eingeschoben. Die Druckmitteleinsteuerung in den Druckraum (13) bzw. das Ausbringen des Druckmittels aus dem Druckraum (13) erfolgt über den Anschlußstutzen (1), den Kanal (3) sowie den Raum (18) des Kupplungsteiles (1, 10). Die Steckkontakte können durch Kleben, Vergießen, Schrauben oder dergleichen im Kupplungsteil (1, 10) befestigt werden. Es ist auch möglich, eine mit mehreren elektrischen Kontakten versehene Platine im Kupplungsteil anzuordnen.

**Patentansprüche**

1. Kupplungseinrichtung zum druckdichten Befestigen einer Druckmittelleitung an einem Druckmittelanschluß eines Bauteiles mit folgenden Merkmalen:

a) mit einem Kupplungsteil (1, 10) ist wenigstens ein mit einer elektrischen Leitung verbundener oder verbindbarer elektrischer Kontakt (6, 15, 16) baulich vereinigt;

b) der elektrische Kontakt (6, 15, 16) dient zum elektrischen Anschluß der elektrischen Leitung an einen in oder an dem Bauteil angeordneten Gegenkontakt;

dadurch gekennzeichnet, daß wenigstens ein Teil des elektrischen Kontaktes (6, 15, 16) innerhalb eines vom Druckmittel durchströmten Raumes (18) des Kupplungsteiles liegt, der Bereich des elektrischen Kontaktes (6, 15, 16), welcher die Mittel zur Verbindung des elektrischen Kontaktes (6, 15, 16) mit der elektrischen Leitung (21) aufweist, jedoch gegen diesen Raum abgedichtet angeordnet ist.

2. Kupplungseinrichtung nach Anspruch 1, dadurch gekennzeichnet, daß eine lösbare Verbindung zwischen dem Druckmittelanschluß (11) und dem Kupplungsteil (1, 10) vorgesehen ist.

3. Kupplungseinrichtung nach Anspruch 1, gekennzeichnet durch die folgenden Merkmale:
a) der elektrische Kontakt (6, 15) ist in einer im Kupplungsteil (1, 10) vorgesehenen Aufnahmebohrung (8) angeordnet;
b) zwischen der Wandung der Aufnahmebohrung (8) und dem elektrischen Kontakt (6, 15) ist ein Dichtelement (9) angeordnet.

4. Kupplungseinrichtung nach wenigstens einem der vorhergehenden Ansprüche, dadurch gekennzeichnet, daß der elektrische Kontakt (6, 15) durch Vergießen im Kupplungsteil (1, 10) befestigt ist.

5. Kupplungseinrichtung nach Anspruch 1, dadurch gekennzeichnet, daß der elektrische Kontakt (6, 15, 16) mit einer elektrischen Leitung (21) verbunden ist, die in einer das Druckmittel führenden Druckmittelleitung angeordnet ist.

6. Kupplungseinrichtung nach wenigstens einem der vorhergehenden Ansprüche, dadurch gekennzeichnet, daß das Kupplungsteil (1, 10) aus Kunststoff besteht.

7. Kupplungseinrichtung nach wenigstens einem der vorhergehenden Ansprüche, dadurch gekennzeichnet, daß im Kupplungsteil (1, 10) mehrere elektrische Kontakte (6, 15, 16) angeordnet sind.

8. Kupplungseinrichtung nach Anspruch 1, dadurch gekennzeichnet, daß das Kupplungsteil (1, 10) als Stecker ausgebildet ist.

## Claims

1. Coupling device for the pressure-tight attachment of a pressure medium line to a pressure medium connection of a component having the following features:
a) at least one electrical contact (6, 15, 16) which is connected or can be connected to an electrical lead is structurally combined with a coupling member (1, 10);
b) the electrical contact (6, 15, 16) serves for the electrical connection of the electrical lead to a mating contact arranged in or on the component;
characterised in that at least a part of the electrical contact (6, 15, 16) lies inside a space (18) in the coupling member through which space the pressure medium flows, but the region of the electrical contact (6, 15, 16) which has the means for the connection of the electrical contact (6, 15, 16) to the electrical lead (21) is arranged so that it is sealed off from this space.

2. Coupling device according to Claim 1, characterised in that a detachable connection is provided between the pressure medium connection (11) and the coupling member (1, 10).

3. Coupling device according to Claim 1, characterised by the following features:
a) the electrical contact (6, 15) is arranged in a location hole (8) provided in the coupling member (1, 10);
b) a sealing element (9) is arranged between the wall of the location hole (8) and the electrical contact (6, 15).

4. Coupling device according to at least one of the preceding claims, characterised in that the electrical contact (6, 15) is fixed in the coupling member (1, 10) by casting.

5. Coupling device according to Claim 1, characterised in that the electrical contact (6, 15, 16) is connected to an electrical lead (21) which is arranged in a pressure medium line conducting the pressure medium.

6. Coupling device according to at least one of the preceding claims, characterised in that the coupling member (1, 10) consists of plastics material.

7. Coupling device according to at least one of the preceding Claims, characterised in that several electrical contacts (6, 15, 16) are arranged in the coupling member (1, 10).

8. Coupling device according to Claim 1, characterised in that the coupling member (1, 10) is in the form of a plug-in connecting device.

## Revendications

1. Dispositif de liaison pour fixer, avec étanchéité à la pression, une conduite de fluide sous pression à un raccord de fluide sous pression d'un élément, le dispositif présentant les caractéristiques suivantes:
a) à une pièce de liaison (1, 10) est réunie, de par construction, au moins un contact électrique (6, 15, 16) relié, ou pouvant être relié, à un conducteur électrique;
b) le contact électrique (6, 15, 16) sert à raccorder électriquement le conducteur électrique à un contre-contact disposé dans ou sur l'élément;
caractérisé en ce qu'au moins une partie du contact électrique (6, 15, 16) se trouve à l'intérieur d'un espace (18) de la pièce de liaison parcouru par le fluide sous pression, mais que toutefois la zone du contact électrique (6, 15, 16) qui présente le moyen de réaliser la liaison du contact électrique (6, 15, 16) avec le conducteur électrique (21) est disposée avec étanchéité à l'égard de cet espace.

2. Dispositif de liaison selon la revendication 1, caractérisé en ce qu'il est prévu une liaison amovible entre le raccord (11) pour le fluide sous pression et la pièce de liaison (1, 10).

3. Dispositif de liaison selon la revendication 1, caractérisé par les caractéristiques suivantes:
a) le contact électrique (6, 15) est disposé dans un alésage de réception (8) prévu dans la pièce de liaison (1, 10);
b) entre la paroi de l'alésage de réception (8) et le contact électrique (6, 15) est disposé un élément d'étanchéité (9).

4. Dispositif de liaison selon au moins l'une des revendications précédentes, caractérisé en ce que le contact électrique (6, 15) est fixé par coulée dans la pièce de liaison (1, 10).

5. Dispositif de liaison selon la revendication 1, caractérisé en ce que le contact électrique (6, 15, 16) est relié à un conducteur électrique (21) qui est disposé dans une conduite dans laquelle passe le fluide sous pression.

6. Dispositif de liaison selon au moins l'une des revendications précédentes, caractérisé en ce que la pièce de liaison (1, 10) est en plastique.

7. Dispositif de liaison selon au moins l'une des revendications précédentes, caractérisé en ce que dans la pièce de liaison (1, 10) sont disposés plusieurs contacts électriques (6, 15, 16).

8. Dispositif de liaison selon la revendication 1, caractérisé en ce que la pièce de liaison (1, 10) est conçue sous forme de fiche.

**Fig. 1**

**Fig. 2**